Europäisches Patentamt

European Patent Office

Office européen des brevets

(11) Veröffentlichungsnummer: **0 296 474**
**A2**

# (12) EUROPÄISCHE PATENTANMELDUNG

(21) Anmeldenummer: 88109525.1

(22) Anmeldetag: 15.06.88

(51) Int. Cl.4 **B01D 53/34**

(30) Priorität: 26.06.87 DE 3721056

(43) Veröffentlichungstag der Anmeldung:
28.12.88 Patentblatt 88/52

(84) Benannte Vertragsstaaten:
**AT BE DE FR GB IT NL**

(71) Anmelder: **BAYER AG**
**Konzernverwaltung RP Patentabteilung**
**D-5090 Leverkusen 1 Bayerwerk(DE)**

(72) Erfinder: **Dietz, Wolfgang**
**Dörperhofstrasse 16**
**D-4150 Krefeld(DE)**
Erfinder: **Gerken, Rudolf, Dr.**
**Ratherstrasse 79**
**D-4150 Krefeld(DE)**
Erfinder: **Lailach, Günther, Dr.**
**Bismarckstrasse 109**
**D-4150 Krefeld(DE)**
Erfinder: **Clasen, Peter, Dr.**
**Kemmerhofstrasse 151**
**D-4150 Krefeld(DE)**

(54) **Verfahren zum Aufheizen feuchter Gase.**

㊍ Die vorliegende Erfindung betrifft ein Verfahren zum Aufheizen halogenwasserstoffhaltiger feuchter Gase, wobei vor der Aufheizung der Gase die Halogenwasserstoffe durch partielle Kondensation des Wasserdampfes aus den Gasen entfernt werden und die Aufheizung der Gase nach Abtrennung des Kondensats in indirekten oder rekuperativen Wärmeaustauschern erfolgt.

EP 0 296 474 A2

## Verfahren zum Aufheizen feuchter Gase

Die Erfindung betrifft ein Verfahren zum Aufheizen halogenwasserstoffhaltiger feuchter Gase.

Das Aufheizen von halogenwasserstoffhaltigen feuchten Gasen bereitet infolge der Korrosivität derartiger Gase große Probleme, insbesondere dann, wenn die relative Feuchte so hoch ist, daß an kalten Wänden der Apparate und Rohrleitungen Halogenwasserstoffsäuren als Kondensat abgeschieden werden können. Diese Problematik tritt insbesondere bei der Wiederaufheizung von Rauchgasen nach einer Rauchgasentschwefelung auf, aus der die Rauchgase annähernd wasserdampfgesättigt austreten. Geringe Restgehalte an HF und HCl verursachen dabei erhebliche Korrosionsprobleme.

Überraschend wurde gefunden, daß durch eine partielle Kondensation des im Gas enthaltenen Wasserdampfes die Halogenwasserstoffe wesentlich effektiver aus dem Gas entfernt werden als beispielsweise durch eine Wäsche mit Wasser oder schwach alkalischen Lösungen. Erfindungsgemäß werden die halogenwasserstoffhaltigen feuchten Gase vor dem Aufheizen abgekühlt und das als verdünnte Halogenwasserstoffsäure anfallende Kondensat vom Gas abgetrennt, bevor dieses aufgeheizt wird.

Gegenstand der Erfindung ist somit ein Verfahren zum Aufheizen halogenwasserstoffhaltiger feuchter Gase, dadurch gekennzeichnet, daß vor der Aufheizung der Gase die Halogenwasserstoffe durch partielle Kondensation des Wasserdampfes aus den Gasen entfernt werden und die Aufheizung der Gase nach Abtrennung des Kondensats in indirekten oder rekuperativen Wärmeaustauschern erfolgt.

Bei Anwesenheit von $SO_2$ in den Gasen würde auch eine Absorption des $SO_2$ im Wasser oder in den alkalischen Lösungen erfolgen, wodurch ein gravierendes Abwasserproblem entstünde, wenn entsprechend dem Stand der Technik die HCl - und HF-Entfernung durch einfache Wäsche erfolgte.

Eine bevorzugte Ausführungsform des erfindungsgemäßen Verfahrens besteht darin, daß 5 bis 50 %, vorzugsweise 10 bis 30 %, des enthaltenen Wasserdampfes sowie die Halogenwasserstoffe kondensiert werden und die halogenwasserstofffreien Gase anschließend in Wärmeaustauschern aufgeheizt werden. Vorzugsweise werden nach dem Abkühlen der Gase gegebenenfalls in diesen enthaltene Flüssigkeitstropfen in Tropfenabscheidern entfernt, bevor die Gase in Wärmeaustauschern aufgeheizt werden.

Das Abkühlen der Gase kann durch indirektes Abkühlen in Wärmeaustauschern erfolgen. Alternativ kann das Abkühlen aber auch dadurch erfolgen, daß das bei der Abkühlung anfallende Kondensat als Kühlmittel zur direkten Abkühlung verwendet wird, wobei die Wärmeenergie durch indirekte oder direkte Abkühlung des im Kreislauf geförderten Kondensats aus dem System abgeführt wird. Erfindungsgemäß kann die Abkühlung des Kondensatkreislaufs im Wärmeaustauschern oder in Kühltürmen erfolgen.

Die Aufheizung der halogenwasserstofffreien Gase kann unproblematisch in rekuperativen oder indirekten Wärmeaustauschern bekannter Bauart erfolgen.

Ein bevorzugter Anwendungsfall des erfindungsgemäßen Verfahrens soll anhand der Fig. ausführlicher erläutert werden.

Rauchgas (1) aus einer Kohlefeuerung wird in einer Naßentschwefelungsanlage (2) entschwefelt. Das entschwefelte Rauchgas (3) ist bei 40 bis 60 °C wasserdampfgesättigt und enthält außer $NO_x$ noch Restmengen $SO_2$, HCl und HF. In einem Wärmeaustauscher (4) wird das Rauchgas mittels Kühlwasser (5, 6) um 2 bis 15 K abgekühlt. Das gekühlte Rauchgas (7) wird durch einen Tropfenabscheider (8) geleitet. Das aus dem Rauchgas abgetrennte Kondensat (9) enthält praktisch das gesamte HCl und HF, das im entschwefelten Rauchgas (3) enthalten war. Es wird vorzugsweise in die Entschwefelungsanlage (2) anstatt Wasser eingespeist. Das HCl- und HF-freie Rauchgas (10) wird in einem Rekuperativwärmeaustauscher oder einem Rohrbündelwärmeaustauscher (11) auf ca. 300 °C aufgeheizt (12). Mittels Heizgas (13) erfolgt eine weitere Aufheizung um 30 bis 50 K, so daß das Rauchgas (14) mit ca. 350 °C in eine SCR-Denox-Anlage (15) eintritt. Das denoxierte Rauchgas (16) wird im Wärmeaustauscher (11) von ca. 350 °C auf 75 bis 100 °C (17) abgekühlt, bevor es durch einen Kamin abgeleitet wird.

Die Erfindung soll durch Beispiele verdeutlicht werden, ohne daß dadurch deren Umfang eingeschränkt wird.

Beispiel 1

Rauchgas aus einer Kohlefeuerung wurde in einer Rauchgasentschwefelungsanlage gemäß EP-A 177 806 unter Bildung von 70 %iger Schwefelsäure entschwefelt. Das entschwefelte Rauchgas war bei 50 °C wasserdampfgesättigt. Es enthielt 1100 mg $NO_x$ (gerechnet als $NO_2$), 60 mg $SO_2$, 5 mg HCl und 3 mg HF pro $m^3$ (alle Volumenangaben, bezogen auf Standardbedingungen). Das Gas wurde in einem Graphitwärmeaustauscher auf 45°C abgekühlt. Aus dem Wärmeaustauscher und dem nachgeschalteten Tropfenabscheider wurden pro m³ Rauchgas 27 g Kondensat mit 0,02 % HCl und 0,005 % HF abgezogen. Im gekühlten Rauchgas waren je m³ noch 0,2 mg HCl und 0,6 mg HF nachweisbar. Das Rauchgas wurde anschließend in einem Graphitwärmeaustauscher auf 65°C und danach in einem Stahlwärmeaustauscher auf 300°C aufgeheizt. Am Stahlwärmeaustauscher wurde keine nennenswerte Korrosion beobachtet, während ohne die erfindungsgemäße Entfernung von HCl und HF aus dem entschwefelten Rauchgas auch nach einer Vorwärmung des Rauchgases auf 120°C an Stahl noch erhebliche Korrosion beobachtet wurde.

Beispiel 2

Rauchgas (mit einer Zusammensetzung wie in Beispiel 1) wurde in einem Füllkörperturm mit Kondensat im Gegenstrom in Kontakt gebracht, das mittels Pumpe im Kreislauf gefördert und in einem Wärmeaustauscher von 50 auf 44°C abgekühlt wurde. Im Füllkörperturm wurde das Rauchgas von 50 auf 45°C abgekühlt. Nach dem Tropfenabscheider enthielt das Rauchgas noch 0,1 mg HCl und 0,1 bis 0,2 mg HF je Nm³ und konnte problemlos aufgeheizt werden.

Aus dem Kondensatkreislauf wurde das anfallende Kondensat kontinuierlich ausgespeist.

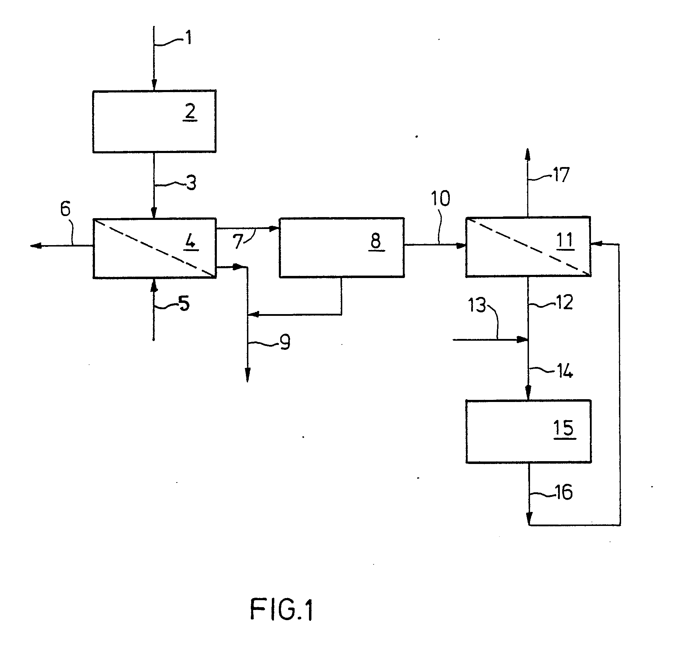

**Ansprüche**

1. Verfahren zum Aufheizen halogenwasserstoffhaltiger feuchter Gase, dadurch gekennzeichnet, daß vor der Aufheizung der Gase die Halogenwasserstoffe durch partielle Kondensation des Wasserdampfes aus den Gasen entfernt werden und die Aufheizung der Gase nach Abtrennung des Kondensats in indirekten oder rekuperativen Wärmeaustauschern erfolgt.

2. Verfahren gemäß Anspruch 1, dadurch gekennzeichnet, daß 5 bis 50 %, vorzugsweise 10 bis 30 %, des Wasserdampfes kondensiert werden.

3. Verfahren gemäß Anspruch 1, dadurch gekennzeichnet, daß die Kondensation des Wasserdampfes durch indirekte Kühlung der Gase erfolgt.

4. Verfahren gemäß Anspruch 1, dadurch gekennzeichnet, daß die Kondensation des Wasserdampfes durch direkte Kühlung der Gase mittels im Kreislauf gefördertem und gekühltem Kondensat erfolgt.

FIG.1